# EUROPÄISCHE PATENTSCHRIFT

(11) **EP 2 672 921 B1**
(45) Veröffentlichungstag und Bekanntmachung des Hinweises auf die Patenterteilung: **18.04.2018**
(21) Anmeldenummer: 12704742.1
(22) Anmeldetag: 08.02.2012
(51) Int. Cl.: A61C 7/16, A61C 7/14

(54) **VERFAHREN ZUR HERSTELLUNG EINER PATIENTENSPEZIFISCHEN AUFLAGE UND ZUGEHÖRIGE AUFLAGE**
METHOD FOR PRODUCING A PATIENT-SPECIFIC SUPPORT, AND ASSOCIATED SUPPORT
PROCÉDÉ DE FABRICATION D'UN ÉLÉMENT D'APPUI ORTHODONTIQUE SPÉCIFIQUE AU PATIENT ET ÉLÉMENT D'APPUI AINSI OBTENU

(30) Priorität: 09.02.2011 DE 102011003893
(43) Veröffentlichungstag der Anmeldung: 18.12.2013
(73) Patentinhaber: DW LINGUAL SYSTEMS GMBH, 49152 Bad Essen (DE)
(72) Erfinder: VU, Hoang, Viet-Ha Julius, 59425 Unna (DE); WIECHMANN, Dirk, 49152 Bad Essen (DE)
(74) Vertreter: Taruttis, Stefan Georg
(86) Internationale Anmeldenummer: PCT/EP2012/052150
(87) Internationale Veröffentlichungsnummer: WO 2012/107503

(56) Entgegenhaltungen:
- EP-A2- 0 084 443
- EP-B1- 1 474 064
- DE-A1- 2 618 952
- US-A- 5 722 826
- US-A- 5 827 058
- US-A- 5 993 205
- US-A1- 2002 058 228
- US-A1- 2003 224 317
- US-A1- 2005 016 884
- US-A1- 2006 223 021
- US-A1- 2008 233 531

## Beschreibung

Die Erfindung betrifft ein Verfahren zur Herstellung einer patientenspezifischen Auflage (Pad) und eine zugehörige Auflage.

Für die kieferorthopädische Behandlung von Patienten mit festsitzenden Klammern werden Brackets auf die zu behandelnden Zähne des Patienten geklebt und durch einen Drahtbogen miteinander verbunden. Die Brackets weisen eine Auflage zur Verbindung mit dem Zahn und einen Bracketkörper auf, der den Drahtbogen aufnimmt.

Als Brackets können Standardbrackets verwendet werden, die nach gewissen Standardwerten normiert sind und somit für eine gewisse Bandbreite von Patienten verwendet werden können. Es gibt aber auch die Möglichkeit, Brackets individuell für Patienten herstellen zu lassen, wie bspw. in EP1474064B1, EP1844730A2, US20020010568A1 und EP1941842A2 offenbart.

Die US 2006/0223021 A1 beschreibt für die Herstellung eines Übertragungstabletts die Anordnung von vorgefertigten Brackets auf einem Set-Up aus Gips mit Klebstoff zwischen der Auflage des Brackets und der Dentition zur Anpassung der Auflage.

Die EP 0084443 A2 beschreibt das Lokalisieren von Brackets auf Zähnen dadurch, dass zunächst Orientierungselemente, beispielsweise Klebstoff oder Plättchen, auf die Zähne eines Patienten aufgebracht werden, und anschließend ein Abdruck für ein Set-Up genommen wird.

Anschließend werden vorgefertigte Brackets auf einem Set-Up, in dem die Orientierungselemente abgebildet sind, angeordnet und auf jedem Bracket wird eine Schicht mit Füllmasse gebildet, die die Positionierungselemente wiedergibt.

Die US 2008/0233531 A1 beschreibt die Herstellung eines Set-Up nach einer optisch abgetasteten Dentition und die Bildung einer spezifischen Oberfläche einer Auflage eines vorgefertigten Brackets durch Verfüllen eines Spalts zwischen der Auflage und dem Set-Up.

Die US 5,722,826 beschreibt das Ausstanzen eines Laminats aus Folie und Maschenwerk, um eine Auflage eines Brackets bilden.

Die US 2002/0058228 A1 beschreibt die Herstellung von Brackets durch Verbinden einer Auflage mit einem Bracketbody oder durch einstückige Herstellung von Auflage und Bracketbody, wobei die Kontur der Auflage den bukkalen Zahnflächen angepasst ist. Die Anpassung dieser vorgefertigten Brackets soll dadurch erfolgen, dass die Auflage auf dem Zahn positioniert wird.

Die US 5,993,205 beschreibt Auflagen für Brackets, die Umfangskonturen entsprechend Zahnflächen haben, um die Ausrichtung und Positionierung der Brackets auf dem Zahn zu erleichtern.

Die US 2003/0224317 A1 beschreibt, dass Brackets, die aus einer Auflage und einem Bracketbody gefügt oder einstückig hergestellt sind, mit Klebstoff an einen Zahn geklebt werden können.

Die DE 2618952 beschreibt die Herstellung von Brackets durch Verschweißen einer an die Zahnoberfläche angepassten Auflage mit einem Bracketbody, wobei sich die Auflage durch Bohrungen auszeichnet, durch die Klebstoff strömen kann.

Die US 5,827,058 beschreibt die Anordnung vorgefertigter Brackets durch Einklemmen in einem längsgeschlitzten elastischen Rohr, wobei die Auflagen mit Klebstoff vorbeschichtet sein können.

Die EP1474064 B1 beschreibt die Herstellung vollständig individualisierter Brackets nach einem vollständig im Computer erzeugten Modell eines Brackets.

Die US 2002/0010568 A1 beschreibt ein Verfahren zur Herstellung patientenspezifischer Auflagen für Brackets, bei dem Kleber auf einen Bracketkörper aufgebracht wird. Der Kleber wird nach dem Aushärten durch Fräsen an die Zahnoberfläche des Patienten angepasst. Alternativ können die Auflagen auch ausgestanzt und anschließend durch Fräsen in die patientenspezifische Form gebracht werden.

Während die Herstellung von Standardbrackets keine Schwierigkeiten bereitet, ist die Herstellung von vollständig individualisierten Brackets sehr aufwändig. In einer Variante stehen in einem Computer einzelne Bracketbestandteile, wie bspw. Haken (Hook), Flügel (Wing), Schlitz (Slot) und Auflage (Pad), zur Verfügung, die dann zu einem virtuellen Bracket zusammengesetzt werden, wobei dies in einem virtuellen Set-Up des Gebisses eines Patienten erfolgt. Das auf diese Weise hergestellte virtuelle Bracket wird an einen 3D-Drucker übermittelt, um damit ein reales Bracket herzustellen.

Bei Standardbrackets wird als nachteilig empfunden, dass sie keine Individualisierung für einen bestimmten Patienten aufweisen. Bei vollständig individualisierten Brackets wird die aufwändige Herstellung als nachteilig empfunden.

Aufgabe der vorliegenden Erfindung ist es daher, auf einfache Weise eine patientenspezifische Auflage herzustellen.

### Allgemeine Beschreibung der Erfindung

Die Aufgabe wird durch ein Verfahren mit den Merkmalen von Anspruch 1 und eine Rohauflagenbibliothek von Anspruch 15 gelöst.

Das Verfahren zur Herstellung einer patientenspezifischen Auflage für ein modular aufgebautes Bracket mit einer Auflage und einem Bracketkörper umfasst die Schritte:
a) Bereitstellen eines vorzugsweise ebenen Auflagematerialabschnitts,
b) Bereitstellen einer Stanze mit mindestens einem Stanzstempel zum Ausstanzen mindestens einer Rohauflage aus dem Auflagematerialabschnitt,
c) Ausstanzen von Rohauflagen aus dem Auflagematerialabschnitt mit Hilfe der Stanze und mit diesen Rohauflagen Bereitstellen einer Rohauflagenbibliothek mit einer Reihe von mindestens 14 Rohauflagenbehältern enthaltend jeweils Rohauflagen für einen Zahn eines Oberkiefers sowie einer Reihe von mindestens 14 Rohauflagenbehältern enthaltend jeweils Rohauflagen für einen Zahn eines Unterkiefers, wobei in der Rohauflagenbibliothek für mindestens einen Zahn mindestens ein weiterer Rohauflagenbehälter angeordnet ist, in dem Rohauflagen einer weiteren Größe und/oder mit Flügelabschnitten und/oder mit halben okklusalen Abschnitten angeordnet sind,
d) Erstellen eines patientenspezifischen Set-Ups, insbesondere aus Gips, von zu behandelnden Zähnen eines Oberkiefers und/oder eines Unterkiefers eines Patienten,
e) Auswählen einer Rohauflage aus der Rohauflagenbibliothek für einen zu behandelnden Zahn des Patienten und
f) Verfüllen eines Spalts zwischen der Rohauflage und dem zugehörigen Zahn im Set-Up mit einem Füllmaterial, insbesondere aus Kunststoff, um eine zahnspezifische Klebefläche für die Auflage herzustellen, die einen Formschluss mit dem klinischen Zahn des Patienten ermöglicht. Im Schritt c) werden aus dem Auflagenmaterialabschnitt mehrere gleiche oder verschiedene Rohauflagen ausgestanzt: Es können beispielsweise nur Rohauflagen für einen bestimmten Zahn ausgestanzt werden. Ferner können mindestens zwei verschiedene Rohauflagen ausgestanzt werden, die jeweils für einen bestimmten Zahn vorgesehen sind, bspw. für den Zahn 11 und 14.

Es können aber auch für alle Zähne eines Oberkiefers und/oder eines Unterkiefers jeweils eine Rohauflage ausgestanzt werden.

Die Rohauflagen können nach dem Ausstanzen weiter vorkonfektioniert werden, um diese weiter bzw. mehr an einen bestimmten Zahn anzupassen, vorteilhaft bspw. in mindestens einem folgenden Prägeschritt. Bevorzugt wird für jeden Zahn eines Oberkiefers und/oder eines Unterkiefers eine Rohauflage vorkonfektioniert.

Das Vorkonfektionieren umfasst bevorzugt ein Anpassen der bukkalen/lingualen Umfangskontur der mindestens einen Rohauflage, um diese Umfangskontur der Rohauflage an eine bestimmte Zahngröße oder -form anzupassen. Auf diese Weise können für einen bestimmten Zahn verschieden große Rohauflagen hergestellt werden.

Das Vorkonfektionieren kann auch ein Umbiegen von ausgewählten Abschnitten einer Rohauflage umfassen. Es können bspw. mesiale und/oder distale Abschnitte einer Rohauflage umgebogen werden, um mesiale und/oder distale Flügelabschnitte der Rohauflage zu bilden, die den zugehörigen Zahn mindestens abschnittsweise umgreifen.

Das Vorkonfektionieren kann auch ein Umbiegen eines okklusalen Abschnitts einer Rohauflage umfassen. Wird ein derartiges Bracket an den Zahn eines Patienten geklebt, so liegt dieser okklusale Abschnitt auf dem Zahn okklusal auf.

Das Vorkonfektionieren umfasst mit Vorteil auch das Ausbilden von Protrusionen in einer Auflage, bspw. von lingualen und/oder bukkalen Protrusionen. Auf diese Weise kann die Rohauflage bspw. an eine linguale konkave/konvexe Struktur eines bestimmten Zahns angepasst werden. In einem Beispiel wird die Rohauflage für ein Lingualbracket für den Zahn 41 mit einer bukkal vorstehenden Protrusion versehen, um es an die linguale konkave Struktur des Zahns 41 anzupassen.

Im Schritt a) wird vorteilhaft ein Auflagenmaterialabschnitt aus einem biokompatiblen Metall oder einer biokompatiblen Legierung, insbesondere Titan, Gold, Silber oder rostfreiem Stahl oder einer Kobalt-Chrom-Legierung, bereitgestellt.

Ist im Schritt e) eine Rohauflage für einen bestimmten Zahn ausgewählt, so wird diese bevorzugt noch manuell an ihren zugehörigen Zahn im Set-Up angepasst, wobei das Anpassen ein Anpassen der Form und/oder der Größe der Rohauflage umfassen kann.

Um für jeden zu behandelnden Zahn eines Patienten ein Bracket herzustellen, wird in einem Set-Up eine patientenspezifische Auflage für jeden dieser Zähne hergestellt.

Jede Auflage wird mit einem Bracketkörper verbunden, um ein Bracket herzustellen, insbesondere mittels Kleben oder Schweißen.

Die auf diese Weise hergestellten Brackets werden im Malokklusionsmodell auf den Zähnen positioniert und dann wird ein Übertragungstablett erstellt. Bevorzugt sind auf dem Malokklusionsmodell, das die Dentition in Fehlstellung zeigt, die Brackets mit ihrer Auflage auf einer Zahnoberfläche angeordnet und es wird eine Masse an den Brackets angeordnet, das die Brackets in ihrer jeweiligen Stellung fixiert, die sie auf einem Zahn dieser Dentition einnehmen.

Um ein schnelles Auswählen der Rohauflagen zu ermöglichen, wird eine Rohauflagenbibliothek mit einer Reihe von mindestens 14, vorteilhaft 16, Rohauflagenbehältern enthaltend jeweils Rohauflagen für einen Zahn eines Oberkiefers sowie einer weiteren Reihe von mindestens 14, vorteilhaft 16, Rohauflagenbehältern enthaltend jeweils Rohauflagen für einen Zahn eines Unterkiefers bereitgestellt.

Für mindestens einen Zahn ist mindestens ein weiterer Rohauflagenbehälter vorgesehen, in dem bspw. Rohauflagen einer weiteren Größe und/oder mit Flügelabschnitten und/oder mit halben okklusalen Abschnitten angeordnet sind.

Vorteilhaft sind die Auflagenbehälter matrixartig angeordnet, insbesondere vergleichbar mit einem FDI-Zahnschema.

### Genaue Beschreibung der Erfindung

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
Fig. 1 mehrere Ansichten einer Rohauflage für den Zahn 21,
Fig. 2 mehrere Ansichten einer Rohauflage für den Zahn 23,
Fig. 3 mehrere Ansichten einer Rohauflage für den Zahn 27,
Fig. 4 mehrere Ansichten einer Rohauflage für den Zahn 35,
Fig. 5 mehrere Ansichten einer Rohauflage für den Zahn 37,
Fig. 6 mehrere Ansichten eines Rohbracketkörpers für den Zahn 1 des Oberkiefers (OK 1er), Fig. 6a mehrere Ansichten eines Bracketkörpers, hergestellt aus dem Rohbracketkörper der Fig. 6,
Fig. 7 mehrere Ansichten eines Rohbracketkörpers für den OK oder UK 6er (Zahn 6 des Ober- oder Unterkiefers),
Fig. 8 mehrere Ansichten eines Rohbracketkörpers für den OK oder UK 7er, Fig. 8a mehrere Ansichten eines Bracketkörpers, hergestellt aus dem Rohbracketkörper der Fig. 8,
Fig. 9 eine perspektivische Ansicht eines Ziel-Set-Ups, wobei eine Rohauflage an einem Zahn angeordnet ist und ein Spalt zwischen beiden mit Kunststoff verfüllt ist,
Fig. 10 eine perspektivische Ansicht eines Zahns, an den ein fertiges Bracket herangeführt wird,
Fig. 11 eine Draufsicht auf eine Rohauflagenbibliothek und
Fig. 12 eine Draufsicht auf eine Bracketkörperbibliothek.

Zunächst werden ein Auflagenmaterialstreifen (100m lang, 5cm breit und 0,4mm dick) aus rostfreiem Stahl sowie eine Stanze mit einem Stanzstempel bereitgestellt, um mit Hilfe der Stanze Rohauflagen aus dem Auflagenmaterialstreifen auszustanzen. Die Stanze stanzt aus einem eingelegten Auflagenmaterialabschnitt des Auflagenmaterialstreifens mehrere gleiche Rohauflagen aus, wobei die bukkale/linguale Umfangskontur derselben an den Zahn angepasst ist, für den die Rohauflage hergestellt wird. Anstelle eines Auflagenmaterialstreifens ist es alternativ möglich, auch einen Auflagenmaterialbogen zu verwenden.

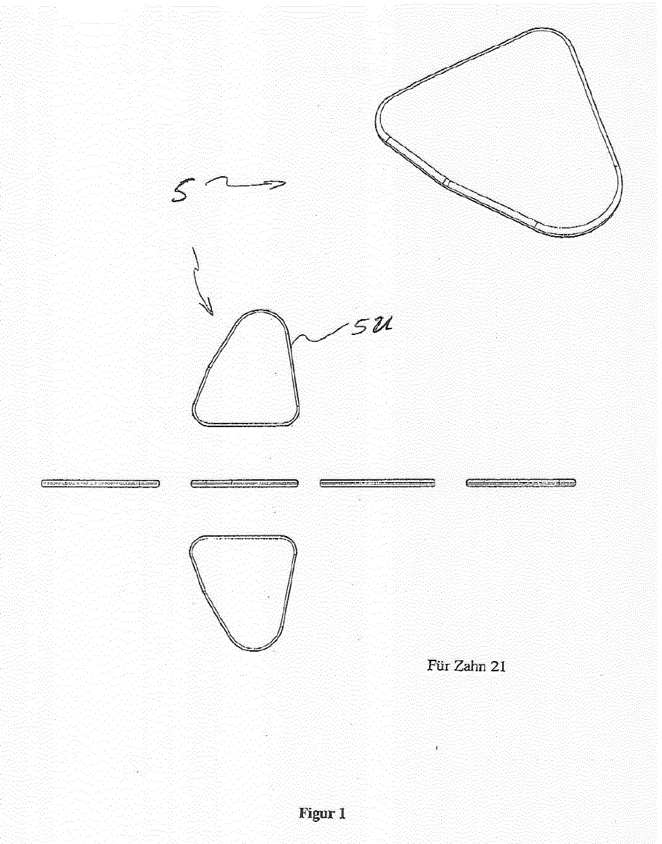

In Fig. 1 sind die sechs Seitenansichten sowie eine perspektivische Ansicht einer Rohauflage 5 für den Zahn 21 gezeigt, die auf diese Weise hergestellt wurde. Die Rohauflage 5 ist eben und weist eine konstante Materialdicke über die gesamte Fläche auf. Die bukkale/linguale Umfangskontur 5U weist nahezu die Form eines Dreiecks auf, wodurch die Rohauflage 5 gut an den Zahn 21 angepasst ist. Die beim Ausstanzen entstandenen Kanten der bukkalen/lingualen Umfangskontur 5U wurden in einem folgenden Prägeschritt beseitigt, wodurch sich die abgerundeten Seitenflächen dieser Umfangskontur 5U ergeben.

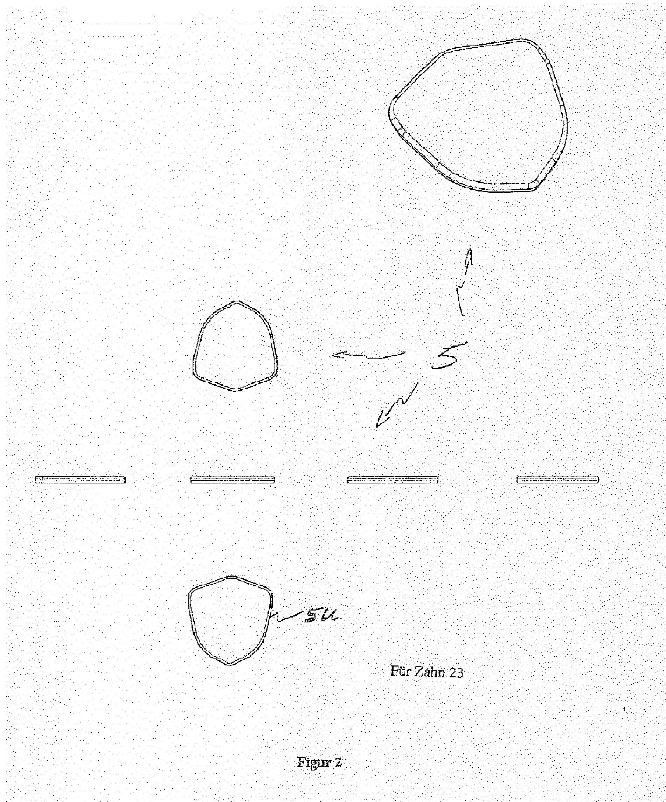

Analog zeigt die Fig. 2 eine nach demselben Verfahren hergestellte Rohauflage 5 für den Zahn 23, wobei sich diese Rohauflage 5 von dem der Fig. 1 lediglich durch die andere Form der bukkalen/lingualen Umfangskontur 5U unterscheidet.

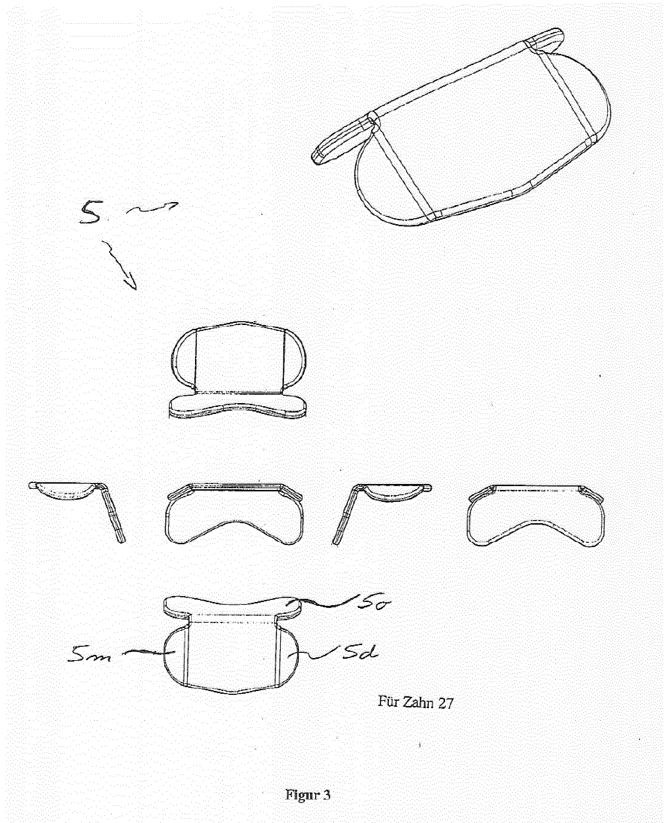

Figur 3 zeigt die sechs Seitenansichten sowie eine perspektivische Ansicht einer Rohauflage 5 für den Zahn 27. Die Rohauflage 5 wurde nach demselben Verfahren, wie unter Bezug auf die Fig. 1 und 2 beschrieben, hergestellt, jedoch wurden noch zwei weitere Biegeschritte durchgeführt. In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 27 auf.

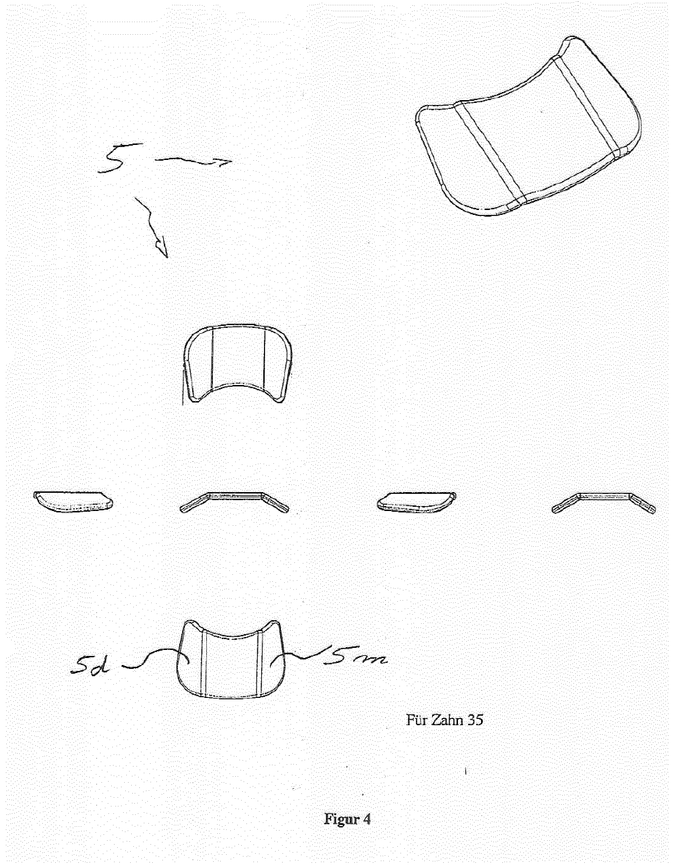

Figur 4 zeigt die sechs Seitenansichten sowie eine perspektivische Ansicht einer Rohauflage 5 für den Zahn 35. Die Rohauflage 5 wurde nach demselben Verfahren, wie unter Bezug auf die Fig. 1 und 2 beschrieben, hergestellt, jedoch wurden in einem weiteren Biegeschritt ein mesialer 5m und ein distaler 5d Flügelabschnitt gebildet.

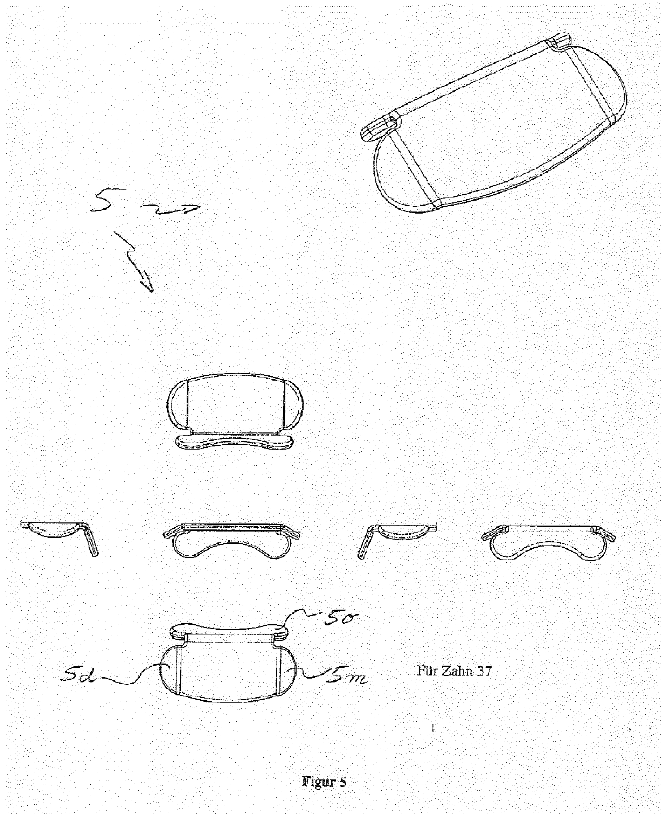

Figur 5 zeigt die sechs Seitenansichten sowie eine perspektivische Ansicht einer Rohauflage 5 für den Zahn 37. Die Rohauflage 5 wurde nach demselben Verfahren, wie unter Bezug auf die Fig. 1 und 2 beschrieben, hergestellt, jedoch wurden noch zwei weitere Biegeschritte durchgeführt, wie zuvor unter Bezug auf Fig. 3 beschrieben: In einem ersten Biegeschritt wurden in einer Presse mit geeignetem Biegewerkzeug ein mesialer 5m und ein distaler 5d Flügelabschnitt durch Umbiegen gebildet. In einem zweiten Biegeschritt wurde in einer Presse mit geeignetem Biegewerkzeug ein okklusaler Abschnitt 5o der Rohauflage 5 gebildet. Dieser okklusale Abschnitt 5o liegt im eingesetzten Zustand beim Patienten okklusal auf dem Zahn 37 auf.

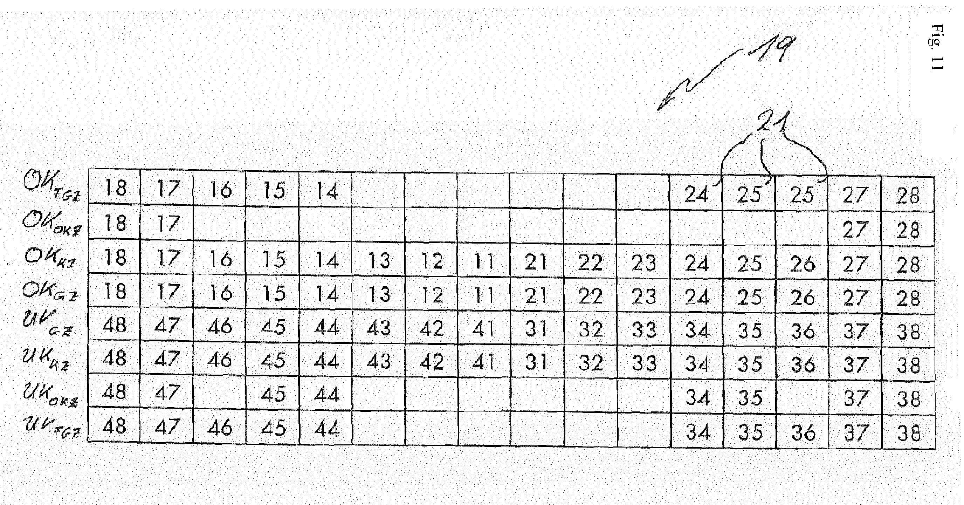

Die auf diese Weise hergestellten Rohauflagen 5 werden in eine Rohauflagenbibliothek 19 einsortiert, die in Fig. 11 dargestellt ist. Die Rohauflagenbibliothek 19 umfasst 16 mal 8 Rohauflagenbehälter 21, die matrixartig angeordnet sind. In der Reihe OK_{GZ} und UK_{GZ} sind jeweils 16 Rohauflagenbehälter 21, d.h. für jeden Zahn des Oberkiefers und des Unterkiefers ist ein Rohauflagenbehälter 21 vorgesehen. Die Rohauflagenbehälter 21 sind analog zu dem FDI-Zahnschema in der Zahnmedizin angeordnet: Von dem 8er links beginnend über die 1er nach rechts bis zu dem 8er der anderen Gesichtshälfte. Dementsprechend sind die Rohauflagenbehälter mit 18 über 11 und 21 bis 28 bezeichnet, respektive mit 48 über 41 und 31 bis 38. In jedem dieser Rohauflagenbehälter 21 befinden sich die zu dem jeweiligen Zahn gehörenden Rohauflagen 5.

In der Reihe OK_{GZ} und UK_{GZ} sind die Rohauflagen 5 für den Oberkiefer bzw. den Unterkiefer mit großen Zähnen. In der Reihe OK_{KZ} und UK_{KZ} sind die Rohauflagen 5 für den Oberkiefer bzw. den Unterkiefer mit kleinen Zähnen. In der Reihe OK_{OKZ} und UK_{OKZ} sind die Rohauflagen 5 mit okklusalen Abschnitten 5o für den Oberkiefer bzw. den Unterkiefer mit kleinen Zähnen, vorliegend nur für die Zähne 17, 18, 28, 27 sowie 34, 35, 37, 38, 44, 45, 47 und 48. In der Reihe OK_{FGZ} und UK_{FGZ} sind die Rohauflagen 5 mit Flügelabschnitten 5m, 5d für den Oberkiefer bzw. den Unterkiefer mit großen Zähnen, vorliegend nur für die Zähne 14, 15 , 16, 17, 18, 24, 25, 26, 27, 28 sowie 34, 35, 36, 37, 38, 44, 45, 46, 47 und 48.

Um nun eine patientenspezifische Auflage herzustellen, wird wie folgt weiter verfahren: Von einem Oberkiefer und Unterkiefer eines Patienten wird jeweils ein Abdruck genommen und mit Hilfe desselben ein Gipsmodell erstellt. Die Gipsmodelle werden in einen Artikulator einartikuliert, der die relative Lage der Kiefer zueinander widerspiegelt (Malokklusionsmodelle). Aus diesem Malokklusionsmodell wird das Ziel-Set-Up gefertigt, das die geplante Situation am Ende der Behandlung darstellt. Um dieses zu erstellen, werden die Zähne aus den Malokklusionsmodellen des Patienten einzeln ausgeschnitten und dann in der zu erreichenden Zielsituation wieder zusammengesetzt, wodurch das Ziel-Set-Up entsteht.

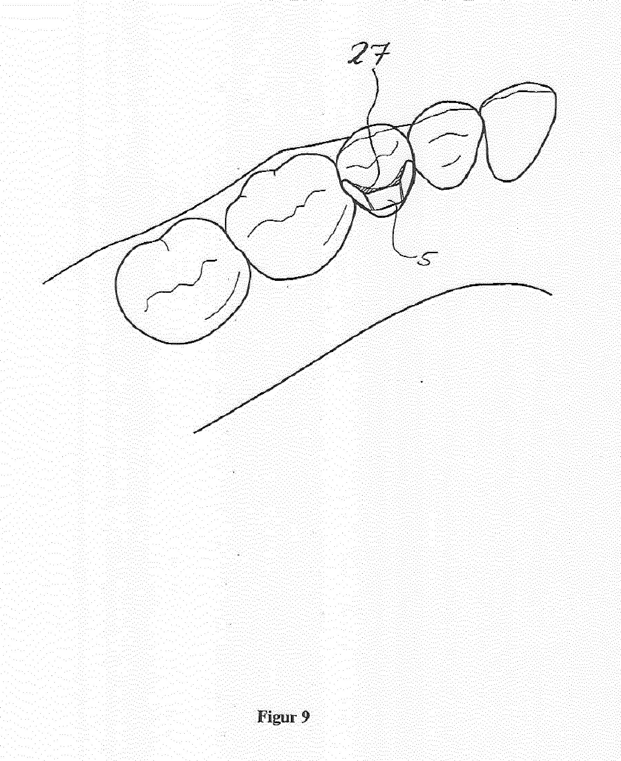

Für die zu behandelnden Zähne wird nun jeweils eine geeignete Rohauflage 5 aus der Rohauflagenbibliothek 19 entnommen. Die entnommenen Rohauflagen 5 werden auf die zugehörigen Zähne des Gipsmodells (Ziel-Set-Up) evtl. noch von Hand weiter angepasst, wobei dabei die Form und/oder die Größe angepasst werden kann, aber auch noch Biegungen von Hand durchgeführt werden können. Anschließend werden die Rohauflagen 5 jeweils an den zugehörigen Zahn im Ziel-Set-Up gehalten und ein Spalt 27 zwischen dem Zahn und der Rohauflage 5 wird mit einem Füllmaterial aus Kunststoff verfüllt, wie in Fig. 9 gezeigt. Auf diese Weise erhält die Rohauflage 5 eine patientenspezifische Klebefläche 3K und wird dadurch zu einer Auflage 3. Diese patientenspezifische Klebefläche 3K kann später formschlüssig auf den Zahn des Patienten aufgesetzt werden und mit Hilfe eines Klebers fest mit diesem verbunden werden.

Die auf diese Weise hergestellten patientenspezifischen Auflagen 3 werden nun noch jeweils mit einem patientenspezifischen Bracketkörper 7 verbunden, der einer Bracketkörperbibliothek 23 entnommen wird, die analog zu der Rohauflagenbibliothek aufgebaut ist, wie folgend beschrieben.

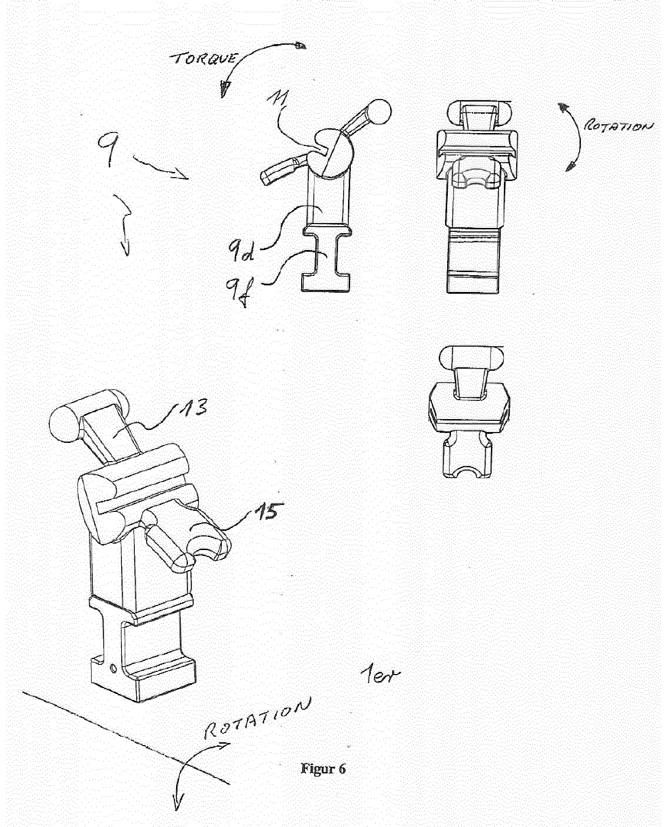

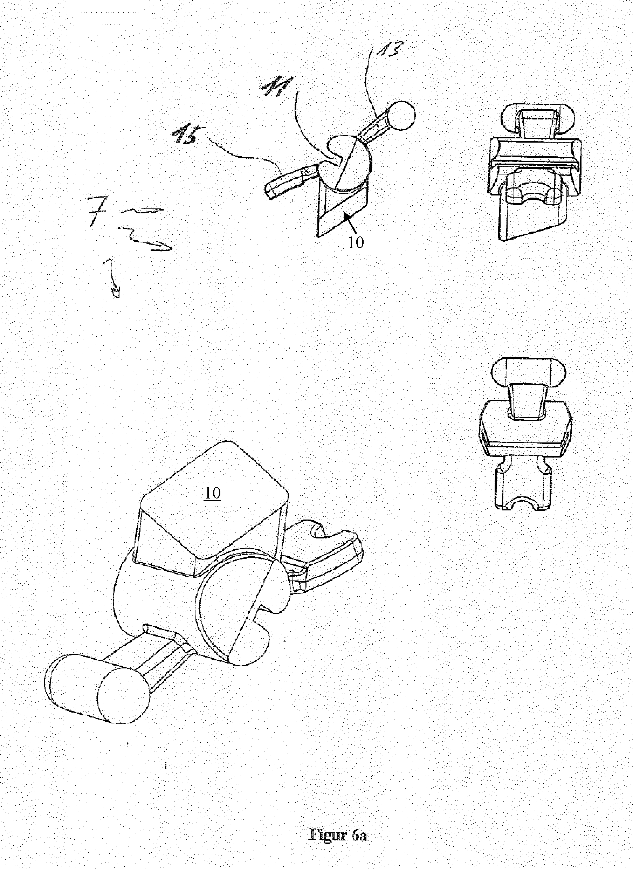

Fig. 6 zeigt verschiedene Ansichten eines Rohbracketkörpers 9 für einen OK 1er, wobei dieser einen Fixierabschnitt 9f, einen Distanzabschnitt 9d, einen Schlitz 11, einen Haken 13 und einen Flügel 15 aufweist. Die Schnittfläche 10, in Figur 6a gezeigt, weist die Schnittfläche 10 auf, die gemäß der drei Parameter angeordnet ist.

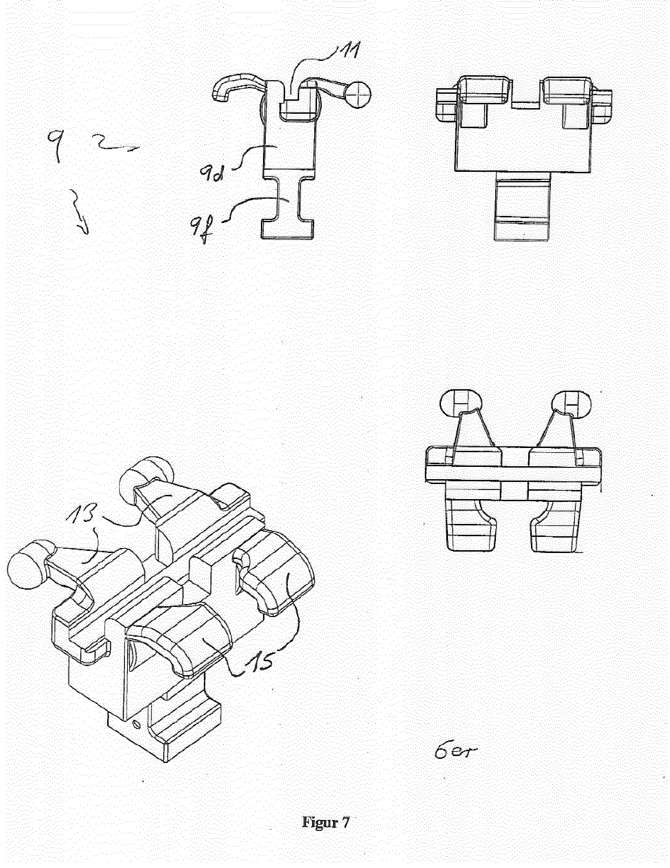

Fig. 7 zeigt verschiedene Ansichten eines Rohbracketkörpers 9 für einen OK oder UK 6er, wobei dieser einen Fixierabschnitt 9f, einen Distanzabschnitt 9d, einen Schlitz 11, zwei Haken 13 und zwei Flügel 15 aufweist.

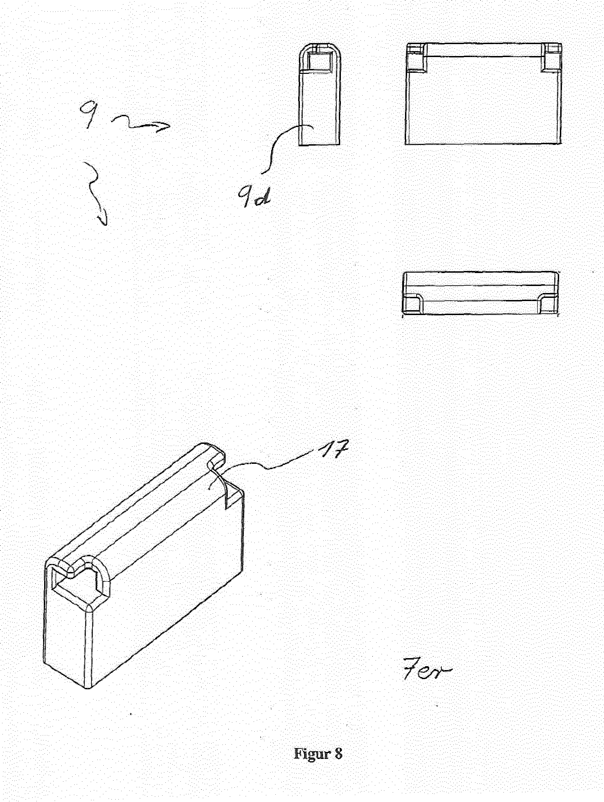

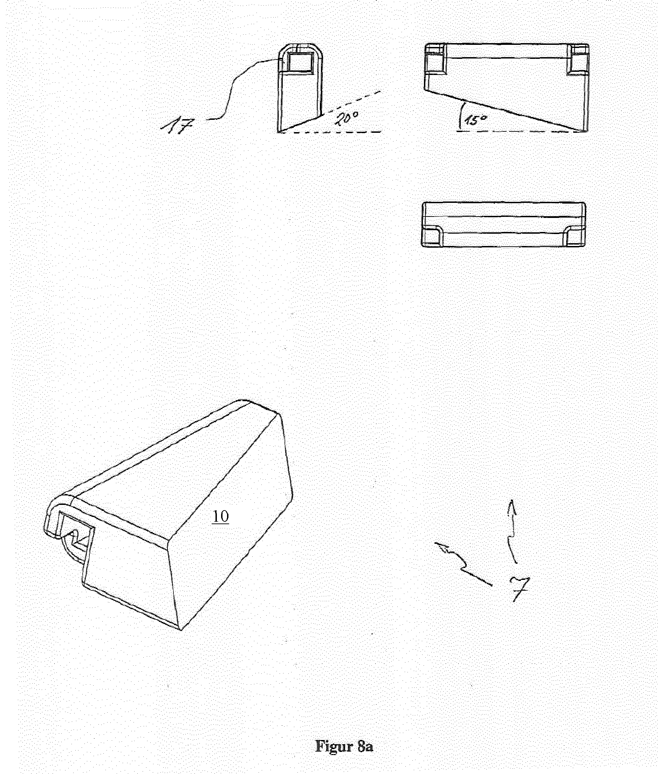

Fig. 8 zeigt verschiedene Ansichten eines Rohbracketkörpers 9 in Form eines Röhrchens (tube) 17 für einen OK oder UK 7er, wobei dieser ebenfalls einen Distanzabschnitt 9d aufweist.

Die Rohbracketkörper 9 wurden in einem MIM-Verfahren hergestellt (alternativ in einem Selective-Laser-Melting-Verfahren) und bestehen aus einer Kobalt-Chrom-Legierung (alternativ bspw. aus rostfreiem Stahl). Die Haken 13 und Flügel 15 weisen jeweils an ihrem dem Schlitz 11 zugewandten Ende eine Materialverjüngung auf, damit sie jeweils noch von Hand in eine geeignete Winkellage um den Schlitz 11 gebogen werden können.

Um einen optimalen Schlitz 11 für die Behandlung zur Verfügung zu haben, werden die Rohbracketkörper 9 der Figuren 6 und 7 mit ihren Fixierabschnitten 9f an einem Träger befestigt. An dem Träger können ca. 100 Stück befestigt werden. Der Träger mit den Rohbracketkörpern 9 wird in ein geeignetes Flüssigkeitsbad getaucht, in dem der Schlitz 11 eines jeden Rohbracketkörpers 9 mit Hilfe eines Drahterosionsverfahrens nachgeschnitten wird. Dies kann auch über mehrere Durchläufe erfolgen (Schlichten). Auf diese Weise entsteht ein sehr präziser Schlitz 11 mit einer geringen Fehlertoleranz von der Norm.

Der Rohbracketkörper der Fig. 8 weist keinen Fixierabschnitt auf, weil er keinen Schlitz aufweist, der für die Behandlung hochpräzise gefertigt sein muss.

Nach diesem Schritt werden die Rohbracketkörper 9 der Figuren 6 bis 8 mit ihrem schlitzseitigen Ende in einer entsprechenden Negativform (zu diesem Ende) fixiert, wobei alternativ eine Fixierung am gegenüberliegenden Ende möglich ist. Mit Hilfe einer Säge wird der Distanzabschnitt 9d der jeweiligen Rohbracketkörper 9 unter verschiedenen Winkeln durchtrennt. Beim Durchtrennen können drei Parameter eingestellt werden:

Der erste Parameter ist ein Abstand der entstehenden Schnittfläche vom Schlitz 11. Je kleiner dieser Abstand gewählt werden kann, umso weniger spürt ein Patient das Bracket.

Der zweite Parameter ist ein Winkel um die Längsachse des Schlitzes 11 (mesio-distale-Achse). Je nach Abweichung des Schnittwinkels von einem durchschnittlichen Standardwert wird mehr oder weniger Torque aufgebracht, s. Fig. 6 zur Nomenklatur.

Der dritte Parameter ist ein Winkel um eine Senkrechte zur Längsachse des Rohbracketkörpers 9 (okklusale-gingivale-Achse). Je nach Abweichung des Schnittwinkels von einem durchschnittlichen Standardwert wird mehr oder weniger Rotation aufgebracht, s. Fig. 6 zur Nomenklatur.

Für einen Rohbracketkörper 9 werden nun diese drei Parameter festgelegt und der Distanzabschnitt 9d mit einer Säge entsprechend durchtrennt, wodurch sich ein Bracketkörper 7 ergibt. Fig. 6a zeigt den Rohbracketkörper 9 der Fig. 6, bei dem der Distanzabschnitt bzgl. Torque bei 55° und bzgl. Rotation bei 15° durchtrennt wurde, wodurch sich der Bracketkörper 7 der Fig. 6a ergibt. Fig. 8a zeigt den Rohbracketkörper 9 der Fig. 8, bei dem der Distanzabschnitt bzgl. Torque bei 20° und bzgl. Rotation bei 15° durchtrennt wurde.

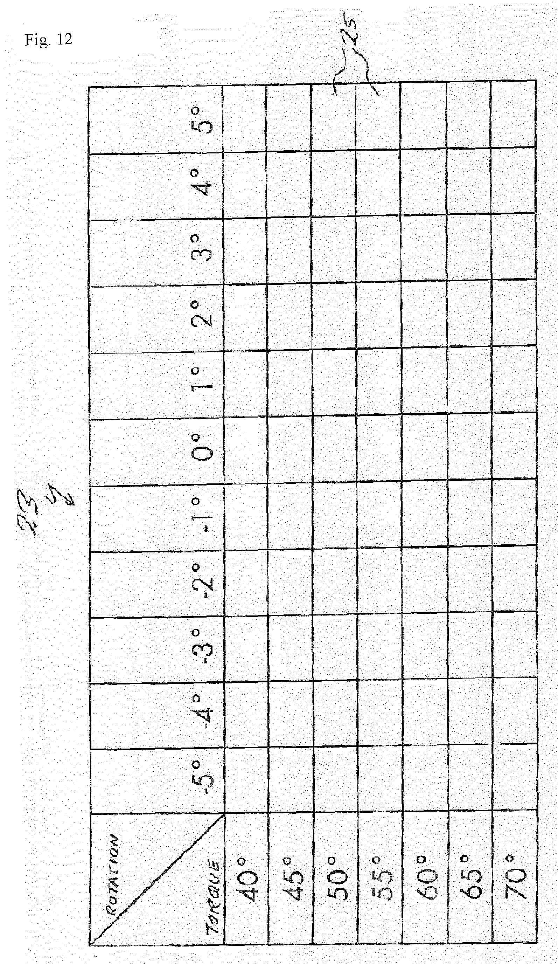

Die auf diese Weise erhaltenen Bracketkörper 7 werden in Bracketkörperbehälter 25 einer Bracketkörperbibliothek 23 einsortiert (Fig. 12), wobei für jeden Rohbracketkörper 9 der Figuren 6 bis 8 jeweils eine Bracketkörperbibliothek zur Verfügung steht. Mit anderen Worten hat der Rohbracketkörper 9 der Fig. 6 seine eigene Bracketkörperbibliothek, genauso wie der der Fig. 7 und 8.

Fig. 12 zeigt eine Bracketkörperbibliothek 23, die analog zu der Rohauflagenbibliothek 19 aufgebaut ist und mit Bracketkörpern 7 gefüllt ist. Die Bracketkörper 7 sind bzgl. Rotation von -5° bis +5° in 1°-Schritten unterteilt und bzgl. Torque von 40° bis 70° in 5°-Schritten unterteilt. Natürlich können hier andere Intervallgrenzen sowie andere Intervallschritte verwendet werden, insbesondere auch in Abhängigkeit von dem Rohbracketkörper 9, d.h. für den Rohbracketkörper 9 der Fig. 6 können andere Intervallgrenzen und andere Intervallschritte verwendet werden als für den der Fig. 7. Die Bracketkörper 7 bilden zusammen mit der Auflage 3 ein fertiges Bracket 1.

Das Verfahren zur Fertigung eines patientenspezifischen Brackets wird wie folgt fortgesetzt: An den zu behandelnden Zähnen im Set-Up ist bereits eine patientenspezifische Auflage 3 befestigt. Für jede Auflage 3 wird nun aus der Bracketkörperbibliothek ein geeigneter Bracketkörper 7 entnommen und an seiner jeweiligen Auflage 3 festgeklebt. Vorteilhaft werden die Bracketkörper 7 über einen "mechanischen Finger" an die jeweilige Auflage 3 geführt und dann festgeklebt.

Von dem auf diese Weise fertig gestellten Bracket-Set-Up wird nun ein 2dim-Scan des OK- und/oder UK-Modells aus der entsprechenden cranialen bzw. caudalen Richtung (Draufsicht) vorgenommen, um an Hand dieser Daten einen entsprechenden Drahtbogen mit Hilfe einer Drahtbiegemaschine zu biegen.

Anschließend werden die Gipsmodelle in einem Wasserbad gewässert, wodurch die Auflagen mit den daran festgeklebten Bracketkörpern gelöst werden, die folgend mit Hilfe eines Lasers aneinander fest geschweißt werden.

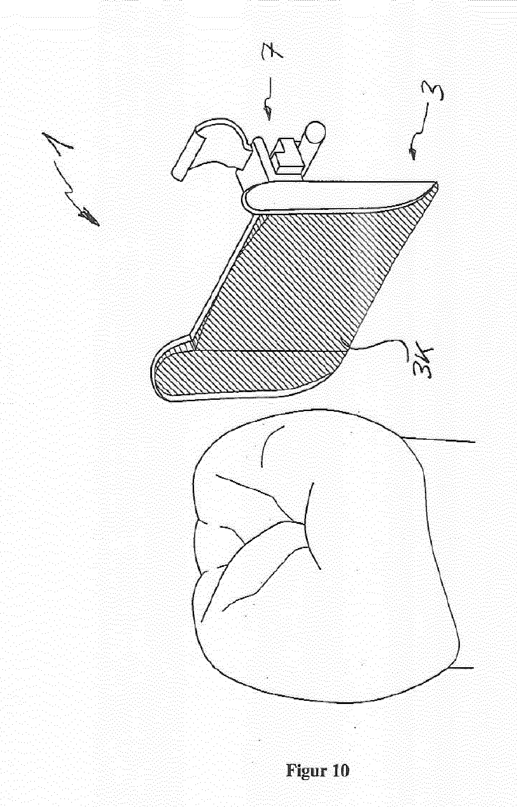

Die auf diese Weise hergestellten Brackets 1 werden auf ein Gipsmodell des Patienten (Malokklusionsmodell) gesetzt, s. Fig. 10, und dort fixiert, um ein Übertragungstablett aus Silikon herzustellen, vorzugsweise durch Anordnen einer härtbaren Masse, bevorzugt auf Silikonbasis, auf den auf dem Malokklusionsmodell angeordneten Brackets 1.

Für die Zähne 21, 23, 27, 35 und 37 wurde in den Figuren 1 bis 5 jeweils eine Rohauflage 5 vorgestellt. Allgemein ist es möglich, für jeden Zahn des Ober- und/oder Unterkiefers jeweils eine speziell auf diesen Zahn angepasste Rohauflage 5 zu entwickeln. Alternativ ist es möglich, eine Rohauflage 5 für mehrere Zähne zu verwenden, bspw. eine Rohauflage 5 für die Zähne 32, 31, 41 und 42 zu verwenden.

Die Rohauflagenbibliothek 19 gemäß Fig. 11 umfasst in jeder Reihe 16 Rohauflagenbehälter 21, in denen jeweils für einen Zahn Rohauflagen 5 angeordnet sind. Es sind somit vom 8er der einen Seite bis zum 8er der anderen Seite jeweils Rohauflagen 5 vorgesehen. Die Rohauflagenbibliothek 19 umfasst in einer alternativen Ausführungsform in jeder Reihe 14 Rohauflagenbehälter 21, in denen jeweils für einen Zahn (vom 7er bis zum 7er) Rohauflagen 5 angeordnet sind. Es sind somit vom 7er der einen Seite bis zum 7er der anderen Seite jeweils Rohauflagen 5 vorgesehen.

Im Rahmen der vorliegenden Erfindung wird unter einer matrixartigen Anordnung eine Anordnung in Zeilen und Spalten verstanden.

Die Bracketkörperbibliothek 23 umfasst Bracketkörperbehälter 25 mit darin angeordneten Bracketkörpern 7. Die Bracketkörperbehälter 25 bzw. die darin angeordneten Bracketkörper 7 sind dabei nach Parameterwerten der drei Parameter (Abstand Schnittfläche - Schlitz, Winkel mesiale-distale-Achse, Winkel okklusale-gingivale-Achse) sortiert. Allgemein ist es möglich, in einer Bracketkörperbibliothek 23 eines Rohbracketkörpers 9 alle drei Parameter zu variieren. So ist es bspw. möglich, die Bracketkörperbibliothek 23 der Fig. 12 mit den gleichen Werten für Torque und Rotation erneut herzustellen, wobei jedoch der dritte Parameter (der Abstand Schnittfläche - Schlitz) variiert ist, bspw. um 1mm vergrößert oder verkleinert. Auf diese Weise gäbe es die Bracketkörperbibliothek 23 der Fig. 12 zweimal: einmal mit einem größeren Abstand und einmal mit einem kleineren Abstand, wodurch eine neue Bracketkörperbibliothek 23 gebildet ist. Die matrixartige Anordnung der Fig. 12 wird somit in die dritte Dimension erweitert, in der der weitere Parameter variiert ist. Diese allgemeine Version ist in der Praxis in der Regel nicht notwendig: Da der Abstand Schnittfläche - Schlitz immer so gering wie möglich sein soll, damit das entstehende Bracket 1 den Patienten so wenig wie möglich stört, kann die Bracketkörperbibliothek 23 der Fig. 12 ausreichend sein, bei der der Abstand Schnittfläche - Schlitz so gering wie möglich ist.

Ein Verfahren zur Herstellung eines patientenspezifischen Bracketkörpers 7 umfasst allgemein vorteilhaft folgende Schritte:
a) Bereitstellen eines Rohbracketkörpers 9 mit einem Distanzabschnitt 9d,
b) Festlegen eines ersten Parameters zum Durchtrennen des Distanzabschnitts 9d, einem Abstand einer entstehenden Schnittfläche des Distanzabschnitts 9d vom Schlitz 11, um eine geeignete Höhe des Bracketkörpers 7 festzulegen,
c) Festlegen eines zweiten Parameters zum Durchtrennen des Distanzabschnitts 9d, einem Schneidwinkel zu einer mesio-distalen-Achse, um einen geeigneten Torquewert des Bracketkörpers 7 festzulegen,
d) Festlegen eines dritten Parameters zum Durchtrennen des Distanzabschnitts 9d, einem Schneidwinkel zu einer okklusal-gingivalen-Achse, um einen geeigneten Rotationswert des Bracketkörpers 7 festzulegen,
e) Durchtrennen des Distanzabschnitts 9d entsprechend der drei festgelegten Parameter, wodurch ein Bracketkörper 7 hergestellt ist.

Bevorzugt wird der Rohbracketkörper 9 im Schritt a) durch ein MIM- oder ein Selective-Laser-Melting-Verfahren bereitgestellt und/oder wird aus einem biokompatiblen Metall oder einer biokompatiblen Legierung, insbesondere Titan, Gold, Silber, rostfreier Stahl oder einer Kobalt-Chrom-Legierung, bereitgestellt.

Mit Vorteil erfolgt das Durchtrennen im Schritt e) mit Hilfe einer Säge.

Das Festlegen der Parameter in den Schritten b) bis d) erfolgt in einer Variante individuell für einen Patienten.

In einer anderen Variante werden die Parameter in den Schritten b) bis d) jeweils in einem vorbestimmten Intervall mit vorbestimmten Intervallschritten variiert, um eine Bracketkörperbibliothek 23 zu erstellen, in der Bracketkörper 7 mit den jeweiligen verschiedenen Parameterwerten angeordnet sind.

Bevorzugt werden die Bracketkörper 7 in einer Bracketkörperbibliothek 23 eines Rohbracketkörpers 9 mit Bracketkörperbehältern 25 zur Aufnahme von Bracketkörpern 7 bereitgestellt, wobei die Bracketkörperbehälter 25 matrixartig angeordnet sind. In den Bracketkörperbehältern 25 sind Bracketkörper 7 angeordnet. Die Bracketkörper 7 sind vorteilhaft zeilenweise nach einem Parameter und spaltenweise nach einem anderen Parameter sortiert in den Bracketkörperbehältern 25 angeordnet. Die beiden Parameter sind bevorzugt jeweils innerhalb ausgewählter Intervallgrenzen mit ausgewählten Intervallschritten variiert.

Mit Vorteil ist einer der Parameter der dritte oder der zweite Parameter und der andere Parameter der zweite oder der dritte Parameter.

Ein vorteilhaftes Verfahren zur Herstellung eines patientenspezifischen Brackets mit einer patientenspezifischen Auflage und einem patientenspezifischen Bracketkörper kann somit in folgende Schritte unterteilt werden:
1. Herstellung einer Rohauflagenbibliothek:
   - Bereitstellen eines vorzugsweise ebenen Auflagenmaterialabschnitts,
   - Bereitstellen einer Stanze mit mindestens einem Stanzstempel zum Ausstanzen von zahnspezifischen Rohauflagen aus dem Auflagenmaterialabschnitt,
   - Ausstanzen der zahnspezifischen Rohauflagen aus dem Auflagenmaterialabschnitt mit Hilfe der Stanze,
   - optionales Vorkonfektionieren der Rohauflagen.
2. Herstellung einer Bracketkörperbibliothek:
   - Bereitstellen von Rohbracketkörpern mit einem Distanzabschnitt,
   - ggfls. Fertigen von hochpräzisen Schlitzen in den Rohbracketkörpern (bspw. mit Drahterosion),
   - Durchteilen der Distanzabschnitte mit ausgewählten Parameterwerten für die drei Parameter.
3. Erstellen eines patientenspezifischen Ziel-Set-Ups, insbesondere aus Gips, vom zu behandelnden Oberkiefer und/oder Unterkiefer eines Patienten.
4. Auswählen einer Rohauflage aus der Rohauflagenbibliothek für einen zu behandelnden Zahn des Patienten.
5. Verfüllen eines Spalts zwischen der Rohauflage und dem zugehörigen Zahn im Ziel-Set-Up mit einem Füllmaterial, insbesondere aus Kunststoff, um eine zahnspezifische Klebefläche für die Auflage herzustellen, die einen Formschluss mit dem klinischen Zahn des Patienten ermöglicht.
6. Auswählen eines Bracketkörpers aus der Bracketkörperbibliothek für jede Auflage.
7. Fixieren des Bracketkörpers an der Auflage, um das patientenspezifische Bracket zu bilden.

Die Verfahrensschritte müssen jedoch nicht in dieser Reihenfolge durchgeführt werden. So ist es bspw. möglich, alternativ zunächst die Rohauflagen 5 mit ihren zugehörigen Bracketkörpern 7 zu verbinden und erst anschließend die Klebefläche 3K zu bilden.

### Bezugszeichenliste

- 1: Bracket
- 3: Auflage
- 3K: Klebefläche der Auflage
- 5: Rohauflage
- 5m: Mesialer (Flügel-) Abschnitt einer Rohauflage
- 5d: Distaler (Flügel-) Abschnitt einer Rohauflage
- 5o: Okklusaler Abschnitt einer Rohauflage
- 5U: bukkale/linguale Umfangskontur
- 7: Bracketkörper
- 9: Rohbracketkörper
- 9d: Distanzabschnitt des Rohbracketkörpers
- 9f: Fixierabschnitt des Rohbracketkörpers
- 10: Schnittfläche
- 11: Schlitz
- 13: Haken
- 15: Flügel
- 17: Röhrchen
- 19: Rohauflagenbibliothek
- 21: Rohauflagenbehälter
- 23: Bracketkörperbibliothek
- 25: Bracketkörperbehälter
- 27: Spalt

## Patentansprüche

1. Verfahren zur Herstellung einer patientenspezifischen Auflage (3) für ein modular aufgebautes Bracket (1) mit einer Auflage (3) und einem Bracketkörper (7), das die Schritte umfasst:
a) Bereitstellen eines vorzugsweise ebenen Auflagematerialabschnitts,
b) Bereitstellen einer Stanze mit mindestens einem Stanzstempel zum Ausstanzen mindestens einer Rohauflage (5) aus dem Auflagematerialabschnitt,
c) Ausstanzen von Rohauflagen (5) aus dem Auflagematerialabschnitt mit Hilfe der Stanze und mit diesen Rohauflagen Bereitstellen einer Rohauflagenbibliothek (19) mit einer Reihe von mindestens 14 Rohauflagenbehältern (21) enthaltend jeweils Rohauflagen (5) für einen Zahn eines Oberkiefers sowie einer Reihe von mindestens 14 Rohauflagenbehältern (21) enthaltend jeweils Rohauflagen (5) für einen Zahn eines Unterkiefers, wobei in der Rohauflagenbibliothek (19) für mindestens einen Zahn mindestens ein weiterer Rohauflagenbehälter (21) angeordnet ist, in dem Rohauflagen (5) einer weiteren Größe und/oder mit Flügelabschnitten (5m, 5d) und/oder mit halben okklusalen Abschnitten (5o) angeordnet sind,
d) Erstellen eines patientenspezifischen Set-Ups, insbesondere aus Gips, von zu behandelnden Zähnen eines Oberkiefers und/oder eines Unterkiefers eines Patienten,
e) Auswählen einer Rohauflage (5) aus der Rohauflagenbibliothek (19) für einen zu behandelnden Zahn des Patienten und
f) Verfüllen eines Spalts (27) zwischen der Rohauflage (5) und dem zugehörigen Zahn im Set-Up mit einem Füllmaterial, insbesondere aus Kunststoff, um eine zahnspezifische Klebefläche (3K) für die Auflage (3) herzustellen, die einen Formschluss mit dem klinischen Zahn des Patienten ermöglicht.

2. Verfahren nach Anspruch 1, **dadurch gekennzeichnet, dass** im Schritt c) mehrere gleiche oder verschiedene Rohauflagen (5) aus dem Auflagematerialabschnitt ausgestanzt werden.

3. Verfahren nach Anspruch 2, **dadurch gekennzeichnet, dass** für alle Zähne eines Oberkiefers und/oder eines Unterkiefers jeweils eine Rohauflage (5) ausgestanzt wird.

4. Verfahren nach einem der vorangehenden Ansprüche, **dadurch gekennzeichnet, dass** das Füllmaterial auf der Oberfläche, die gegenüber der Rohauflage (5) liegt, in einer Form aushärtet, die formschlüssig zu einem Zahn des Set-Ups ist.

5. Verfahren nach einem der vorangehenden Ansprüche, **gekennzeichnet durch** ein Vorkonfektionieren der mindestens einen Rohauflage (5) an einen bestimmten Zahn nach dem Schritt c), bspw. in mindestens einem folgenden Prägeschritt, insbesondere Vorkonfektionieren einer Rohauflage (5) an einen jeweiligen Zahn eines Oberkiefers und/oder eines Unterkiefers.

6. Verfahren nach Anspruch 5, **dadurch gekennzeichnet, dass** das Vorkonfektionieren ein Anpassen der bukkalen/lingualen Umfangskontur (5U) der mindestens einen Rohauflage (5) umfasst, um diese Umfangskontur (5U) der Rohauflage (5) an eine bestimmte Zahngröße oder -form anzupassen.

7. Verfahren nach Anspruch 5 oder 6, **dadurch gekennzeichnet, dass** das Vorkonfektionieren ein Umbiegen von ausgewählten Abschnitten einer Rohauflage (5) umfasst, insbesondere das Umbiegen von mesialen und/oder distalen Abschnitten einer Rohauflage (5), um mesiale und/oder distale Flügelabschnitte (5m, 5d) der Rohauflage (5) zu bilden, die den zugehörigen Zahn mindestens abschnittsweise umgreifen.

8. Verfahren nach einem der Ansprüche 5 bis 7, **dadurch gekennzeichnet, dass** das Vorkonfektionieren ein Umbiegen eines okklusalen Abschnitts einer Rohauflage (5) umfasst, der folgend auf dem zugehörigen Zahn okklusal aufliegt.

9. Verfahren nach einem der Ansprüche 5 bis 8, **dadurch gekennzeichnet, dass** das Vorkonfektionieren das Ausbilden von lingualen/bukkalen Protrusionen bei mindestens einer Rohauflage (5) umfasst, um es bspw. an eine linguale konkave/konvexe Struktur eines bestimmten Zahns anzupassen.

10. Verfahren nach einem der vorangehenden Ansprüche, **dadurch gekennzeichnet, dass** im Schritt a) ein Auflagematerialabschnitt aus einem biokompatiblen Metall oder einer biokompatiblen Legierung, insbesondere Titan, Gold, Silber oder rostfreiem Stahl oder einer Kobalt-Chrom-Legierung, bereitgestellt wird.

11. Verfahren nach einem der vorangehenden Ansprüche, **gekennzeichnet durch** manuelles Anpassen der im Schritt e) ausgewählten Rohauflage (5) an ihren zugehörigen Zahn, wobei das Anpassen ein Anpassen der Form und/oder der Größe der Rohauflage umfasst.

12. Verfahren nach einem der vorangehenden Ansprüche, **dadurch gekennzeichnet, dass** für jeden zu behandelnden Zahn eines Patienten in einem Set-Up eine Auflage (3) hergestellt wird.

13. Verfahren nach Anspruch 12, **dadurch gekennzeichnet, dass** jede Auflage (3) mit einem Bracketkörper (7) verbunden wird, um ein Bracket (1) herzustellen, insbesondere mittels Kleben oder Schweißen.

14. Verfahren nach Anspruch 13, **dadurch gekennzeichnet, dass** die Brackets (1) in einem Malokklusionsmodell auf den Zähnen positioniert werden und dann ein Übertragungstablett durch Anordnen einer härtbaren Masse auf den auf dem Malokklusionsmodell positionierten Brackets (1) hergestellt wird.

15. Rohauflagenbibliothek (19) von aus einem Auflagenmaterialabschnitt gestanzten Rohauflagen (5) mit einer Reihe von mindestens 14, vorteilhaft 16, Rohauflagenbehältern (21) enthaltend jeweils Rohauflagen (5) für einen Zahn eines Oberkiefers sowie einer weiteren Reihe von mindestens 14, vorteilhaft 16, Rohauflagenbehältern (21) enthaltend jeweils Rohauflagen (5) für einen Zahn eines Unterkiefers, wobei für mindestens einen Zahn mindestens ein weiterer Rohauflagenbehälter (21) angeordnet ist, in dem Rohauflagen (5) einer weiteren Größe und/oder mit Flügelabschnitten (5m, 5d) und/oder mit halben okklusalen Abschnitten (5o) angeordnet sind.

16. Rohauflagenbibliothek (19) nach Anspruch 15, **dadurch gekennzeichnet, dass** die Rohauflagenbehälter (21) matrixartig angeordnet sind, insbesondere vergleichbar mit einem FDI-Zahnschema.

## Claims

1. Process for producing a patient specific pad (3) for a modular constructed bracket (1) having a pad (3) and a bracket body (7), which comprises the steps:
a) providing a preferably flat pad material section,
b) providing a blanking press having at least one punch for blanking at least one raw pad (5) out of the pad material section,
c) blanking of raw pads (5) out of the pad material section by means of the blanking press and providing a raw pad library (19) with these raw pads having a row of at least 14 raw pad containers (21), each containing raw pads (5) for a tooth of an upper jaw as well as a row of at least 14 raw pad containers (21), each containing raw pads (5) for a tooth of a lower jaw, wherein in the raw pad library (19) for at least one tooth there is arranged at least one further raw pad container (21) in which raw pads (5) of a further size and/or with wing sections (5m, 5d) and/or with half occlusal sections (5o) are arranged,
d) producing a patient specific set-up, especially of plaster, of teeth of an upper jaw and/or of a lower jaw to be treated of a patient,
e) selecting a raw pad (5) from the raw pad library (19) for a tooth to be treated of the patient, and
f) filling a gap (27) between the raw pad (5) and the pertaining tooth in a set-up using a filling material, especially of polymer, for producing for the pad (3) a tooth specific adherend surface (3K) allowing for a form fit to the clinical tooth of the patient.

2. Process according to claim 1, **characterized in that** in step c) several same or different raw pads (12) are blanked out of the pad material section.

3. Process according to claim 2, **characterized in that** for all teeth of an upper jaw and/or of a lower jaw a raw pad (5) each is blanked.

4. Process according to one of the preceding claims, **characterized in that** on the surface arranged opposite the raw pad (5) the filling material hardens in a form having form fit to a tooth of the set-up.

5. Process according to one of the preceding claims, **characterized by** pre-fabricating the at least one raw pad (5) to a specific tooth subsequent to step c), e.g. in at least one following embossing step, especially pre-fabricating a raw pad (5) to a respective tooth of an upper jaw and/or of a lower jaw.

6. Process according to claim 5, **characterized in that** the pre-fabricating comprises an adapting of the buccal/lingual peripheral contour (5U) of the at least one raw pad (5) in order to adapt this peripheral contour (5U) of the raw pad (5) to a specific size or form of a tooth.

7. Process according to claim 5 or 6, **characterized in that** the pre-fabricating comprises bending of selected sections of a raw pad (5), especially bending of mesial and/or distal sections of a raw pad (5) in order to form mesial and/or distal wing sections (5m, 5d) of the raw pad (5) which at least sectionwise surround the pertaining tooth.

8. Process according to one of claims 5 to 7, **characterized in that** the pre-fabricating comprises bending of an occlusal section of a raw pad (5) which subsequently occlusally lies on the pertaining tooth.

9. Process according to one of claims 5 to 8, **characterized in that** the pre-fabricating comprises the forming of lingual/buccal protrusions one at least one raw pad (5), e.g. in order to adapt it to a lingual concave/convex structure of a specific tooth.

10. Process according to one of the preceding claims, **characterized in that** in step a) a pad material section is provided of a biocompatible metal or of a biocompatible alloy, especially of titanium, gold, silver, or stainless steel or of a cobalt-chromium-alloy.

11. Process according to one of the preceding claims, **characterized by** manually adapting the raw pad (5) selected in step e) to a pertaining tooth, wherein the adaptation comprises adapting the shape and/or the size of the raw pad.

12. Process according to one of the preceding claims, **characterized in that** for each tooth to be treated of a patient a pad (3) is produced in a set-up.

13. Process according to claim 12, **characterized in that** each pad (3) is connected to a bracket body (7) for producing a bracket (1), especially by means of glueing or welding.

14. Process according to claim 13, **characterized in that** the brackets (1) are positioned on the teeth in a malocclusion model and then a transfer tray is produced by arranging a hardenable mass on the brackets (1) which are positioned on the malocclusion model.

15. Raw pad library (19) of raw pads (5) blanked out of a pad material section having a row of at least 14, preferably 16 raw pad containers (21), each containing raw pads (5) for a tooth of an upper jaw as well as a further row of at least 14, preferably 16, raw pad containers (21), each containing raw pads (5) for a tooth of a lower jaw, wherein for at least one tooth there is arranged at least one further raw pad container (21), in which raw pads (5) of a further size and/or having wing sections (5m, 5d) and/or with half occlusal sections (5o) are arranged.

16. Raw pad library (19) according to claim 15, **characterized in that** the raw pad containers (21) are arranged like a matrix, especially comparable to an FDI-tooth scheme.

## Revendications

1. Procédé de fabrication d'un élément d'appui orthodontique (3) spécifique au patient pour une bague orthodontique (1) de structure modulaire, comprenant un élément d'appui (3) et un corps de bague (7), procédé comprenant les étapes suivantes:
a) Préparation d'un segment de matériau pour élément d'appui de préférence plan,
b) Préparation d'un outil à estamper pourvu d'au moins un poinçon pour estamper au moins un élément d'appui brut (5) à partir du segment de matériau pour élément d'appui,
c) Estampage d'éléments d'appui bruts (5) à partir du segment de matériau pour élément d'appui à l'aide de l'outil à estamper et, à l'aide desdits éléments d'appui bruts, préparation d'une bibliothèque d'éléments d'appui bruts (19) avec une série d'au moins 14 bacs éléments d'appui bruts (21) contenant les éléments d'appui bruts respectifs (5) pour une dent de mâchoire supérieure de même qu'une série d'au moins 14 bacs éléments d'appui bruts (21) contenant des éléments d'appui bruts respectifs (5) pour une dent de mâchoire inférieure, dans lequel au moins un autre bac éléments d'appui bruts (21) est prévu dans la bibliothèque d'éléments d'appui bruts (19) pour au moins une dent, lequel bac contient des éléments d'appui bruts (5) d'une autre taille et/ou des segments d'ailette (5m, 5d) et/ou des segments semi-occlusaux (5o),
d) Fabrication d'un moulage spécifique au patient, en particulier en plâtre, pour les dents à traiter au niveau de la mâchoire supérieure et/ou de la mâchoire inférieure d'un patient,
e) Sélection d'un élément d'appui brut (5) à partir de la bibliothèque d'éléments d'appui bruts (19) pour une dent à traiter d'un patient et
f) Remplissage d'un interstice (27) entre l'élément d'appui brut (5) et la dent correspondante du moulage avec une matière de remplissage, en particulier plastique, afin de produire une surface de collage (3K) spécifique à la dent pour l'élément d'appui (3), ce qui permet une liaison par complémentarité de forme avec la dent naturelle du patient.

2. Procédé selon la revendication 1, **caractérisé en ce que** lors de l'étape c) plusieurs éléments d'appui bruts identiques ou différents (5) sont estampés à partir du segment de matériau pour élément d'appui.

3. Procédé selon la revendication 2, **caractérisé en ce qu'**un élément d'appui brut (5) est estampé respectivement pour toutes les dents d'une mâchoire supérieure et/ou d'une mâchoire inférieure.

4. Procédé selon l'une quelconque des revendications précédentes, **caractérisé en ce que** la matière de remplissage durcit à la surface opposée à élément d'appui brut (5) de manière à produire une liaison par complémentarité avec une dent du moulage.

5. Procédé selon l'une quelconque des revendications précédentes, **caractérisé par** une préfabrication dudit au moins un élément d'appui brut (5) sur une dent précise après l'étape c), soit lors d'une moins une étape de prise d'empreinte suivante, en particulier préfabrication d'un élément d'appui brut (5) sur une dent respective d'une mâchoire supérieure et/ou d'une mâchoire inférieure.

6. Procédé selon la revendication 5, **caractérisé en ce que** la préfabrication englobe l'adaptation du contour circonférentiel buccal/lingual (5U) dudit au moins un élément d'appui brut (5) afin d'adapter ledit contour circonférentiel (5U) de élément d'appui brut (5) à une taille de dent ou une forme de dent précises.

7. Procédé selon les revendications 5 ou 6, **caractérisé en ce que** la préfabrication englobe le pliage de segments sélectionnés d'un élément d'appui brut (5), en particulier le pliage de segments mésiaux et/ou distaux d'un élément d'appui brut (5), pour constituer des segments d'ailette mésiaux et/ou distaux (5m, 5d) de l'élément d'appui brut (5), segments qui vont enserrer au moins partiellement la dent correspondante.

8. Procédé selon l'une des revendications 5 à 7, **caractérisé en ce que** la préfabrication englobe le pliage d'un segment occlusal d'un élément d'appui brut (5), segment allant ensuite reposer de manière occlusale sur la dent correspondante.

9. Procédé selon l'une des revendications 5 à 8, **caractérisé en ce que** la préfabrication englobe la formation de protubérances linguales/buccales au niveau d'au moins un élément d'appui brut (5), pour permettre une adaptation par exemple à une structure linguale concave/convexe d'une dent précise.

10. Procédé selon l'une quelconque des revendications précédentes, **caractérisé en ce que** l'on prépare lors de l'étape a) un segment de matériau pour élément d'appui à partir d'un métal biocompatible ou d'un alliage biocompatible, en particulier titane, or, argent ou acier inoxydable ou un alliage cobalt-chrome.

11. Procédé selon l'une quelconque des revendications précédentes, **caractérisé par** une adaptation manuelle de l'élément d'appui brut (5) sélectionné lors de l'étape e) au niveau de sa dent correspondante, l'opération consistant une adaptation de la forme et/ou de la taille de élément d'appui brut.

12. Procédé selon l'une quelconque des revendications précédentes, **caractérisé en ce que** l'on produit un élément d'appui (3) pour chaque dent à traiter d'un patient dans un moulage.

13. Procédé selon la revendication 12, **caractérisé en ce que** chaque élément d'appui (3) est relié par un corps de bague (7), pour constituer une bague (1), en particulier par collage ou soudage.

14. Procédé selon la revendication 13, **caractérisé en ce que** les bagues (1) sont positionnées dans un moule de malocclusion sur les dents, avant de fabriquer une tablette de transfert en disposant une masse durcissable sur les bagues (1) placées sur le moule de malocclusion.

15. Bibliothèque d'éléments d'appui bruts (19) composée éléments d'appui bruts (5) estampés à partir d'un segment de matériau d'éléments d'appui bruts, avec une série d'au moins 14, avantageusement 16, bacs éléments d'appui bruts (21) contenant des éléments d'appui bruts (5) respectifs pour une dent d'une mâchoire supérieure de même qu'une autre série d'au moins 14, avantageusement 16, bacs éléments d'appui bruts (21) contenant des éléments d'appui bruts (5) respectifs pour une dent d'une mâchoire inférieure, dans lequel au moins un autre bac d'éléments d'appui bruts (21) est prévu pour au moins une dent, bac dans lequel sont agencés des éléments d'appui bruts (5) d'une autre taille et/ou munis de segments d'ailette (5m, 5d) et/ou de segments semi-occlusaux (5o).

16. Bibliothèque d'éléments d'appui bruts (19) selon la revendication 15, **caractérisée en ce que** les bacs éléments d'appui bruts (21) sont disposés en matrice, en particulier de manière comparable à un schéma de dents FDI.
